# EUROPÄISCHE PATENTSCHRIFT

(11) **EP 4 420 588 B1**
(45) Veröffentlichungstag und Bekanntmachung des Hinweises auf die Patenterteilung: **14.01.2026**
(21) Anmeldenummer: 24155593.7
(22) Anmeldetag: 02.02.2024
(51) Int. Cl.: A47L 11/40, G05D 1/00

(54) **VERFAHREN ZU EINER KOLLISIONSFREIEN WAND- UND/ODER KANTENREINIGUNG**
METHOD FOR COLLISION-FREE CLEANING OF WALLS AND/OR EDGES
PROCÉDÉ DE NETTOYAGE DE PAROI ET/OU DE BORD SANS COLLISION

(30) Priorität: 23.02.2023 DE 102023201679
(43) Veröffentlichungstag der Anmeldung: 28.08.2024
(73) Patentinhaber: BSH Hausgeräte GmbH, 81739 München (DE)
(72) Erfinder: Schnitzer, Frank, 97616 Bad Neustadt (DE); Daniel, Kristina, 97616 Bad Neustadt (DE)

(56) Entgegenhaltungen:
- DE-B4- 102020 208 400
- US-B2- 10 602 896

## Beschreibung

Die Erfindung betrifft ein Verfahren zu einer kollisionsfreien Wand- und/oder Kantenreinigung mittels eines mobilen, selbstfahrenden Geräts, insbesondere eines Bodenreinigungsgeräts zur autonomen Bearbeitung von Bodenflächen, wie einen Saug- und/oder Kehr- und/oder Wischroboter, mit einem Wandfolgesensor und einem Abstandssensor.

Mobile, selbstfahrende Geräte, wie beispielsweise Saugroboter, haben die Aufgabe, autonom möglichst eine gesamte Bodenfläche zu reinigen. Insbesondere sollen Saugroboter ihren Nutzern die Aufgabe abnehmen, den Boden regelmäßig von Staub und Schmutz zu befreien. Ein besonderes Augenmerk wird hierbei auf die Reinigung entlang von Wänden gelegt. Ein Saugroboter sollte in der Lage sein, sehr nah an vorhandenen Wänden oder anderen Gegenständen entlangzufahren, um seine Reinigungselemente wie beispielsweise Kehrbürsten oder Saugmund in unmittelbarer Nähe zu Wandkanten zu bringen und so verbleibende, ungereinigte Bodenbereiche zu vermeiden. Kann dabei der Saugroboter seine Umgebung auf einem niedrigen Höhenniveau nicht mit Sensoren erfassen, besteht die Gefahr, dass der Saugroboter während seiner wandnahen Fahrt vermehrt an Hindernisse wie etwa Sockelleisten anstößt. Die DE102020208400B4 offenbart ein Verfahren zur verbesserten Kantenreinigung einer Wand.

Für die Ecken- und Kantenreinigung ist meist an einem vorderen Gehäuseeck des Geräts eine rotierende Seitenbürste angebracht, die bei der Reinigung entlang von Wänden Staub und Schmutz entlang der Kante zu einer Gerätemitte kehrt. Eine derartige Seitenbürste hat jedoch wenig Wirkung auf beispielsweise Teppichböden, da sich die Schmutzpartikel in den Teppichfasern verhängen. Aufgrund einer unebenen Oberfläche der Teppiche kann meist keine Kehrwirkung erzielt werden. Dadurch besteht die Gefahr, dass Schmutz und Staub sichtbar auf dem Teppich liegen bleiben. Um möglichst effektiv Staub aus dem Teppich zu entfernen, ist es vorteilhaft, den Teppich mit einem Saugmund und einer Bürstenwalze des Geräts zu überstreichen, da dann die Saugwirkung die Staubentfernung unterstützt.

Aufgrund der Seitenbürste ist der Saugmund des Geräts jedoch häufig asymmetrisch angeordnet und insbesondere an einer Seitenbürsten-Seite weiter entfernt von der Geräteseite als von einer der Seitenbürsten-Seite gegenüberliegenden Seite. Daraus resultiert eine suboptimale Teppichreinigung an der Seitenbürsten-Seite.

Daher ist es vorteilhaft, das Gerät nicht mit seiner Seitenbürsten-Seite an einer Wand zur Reinigung entlang fahren zu lassen, sondern mit der gegenüberliegenden Seite. Auf dieser Seite verfügt das Gerät jedoch häufig nicht über einen Wandfolgesensor, womit die Gefahr von Kollisionen an Hindernissen und Wänden nachteilig steigt. Daher fährt das Gerät bei seiner Reinigungsfahrt herkömmlicherweise so, dass der zur Seite gerichtete Wandfolgesensor die Wand erfassen kann.

Um das Gerät mit möglichst hoher Genauigkeit entlang der Wand fahren zu lassen, um einerseits keine Kollisionen mit beispielsweise einer Sockelleiste zu riskieren und andererseits möglichst weit bis an die Kante zu reinigen, ist eine geeignete Sensorik am Gerät notwendig. Aus Kostengründen ist es jedoch vorteilhaft, so wenig Wandsensoren wie möglich zu verbauen, also insbesondere keinen zweiten Wandfolgesensor auf der gegenüberliegenden Seite anzubringen. Dadurch erschwert sich allerdings eine Wandverfolgung in verschiedenen Fahrtrichtungen, insbesondere ein beidseitiges Entlangfahren von Kanten und Wänden, mit geringer Kollisionsgefahr bei gleichzeitig effektiver Kanten- beziehungsweise Wandreinigung.

Aufgabe der Erfindung ist es daher, ein Verfahren zu einer kollisionsfreien Wand- und/oder Kantenreinigung bereitzustellen, das die oben genannten Nachteile vermeidet, und das insbesondere ein beidseitiges Entlangfahren von Kanten und Wänden mit geringer Kollisionsgefahr bei gleichzeitig effektiver Kanten- beziehungsweise Wandreinigung gewährleistet.

Diese Aufgabe wird durch ein Verfahren zu einer kollisionsfreien Wand- und/oder Kantenreinigung mit den Merkmalen des Anspruchs 1 gelöst. Vorteilhafte Ausgestaltungen und Weiterbildungen sind Gegenstand der Unteransprüche.

Erfindungsgemäß umfasst ein Verfahren zu einer kollisionsfreien Wand- und/oder Kantenreinigung mittels eines mobilen, selbstfahrenden Geräts, insbesondere eines Bodenreinigungsgeräts zur autonomen Bearbeitung von Bodenflächen, wie ein Saug- und/oder Kehr- und/oder Wischroboter, das einen seitlich angeordneten Wandfolgesensor und einen Abstandssensor umfasst, folgende Verfahrensschritte: Befahren eines Wandabschnitts in einem ersten Abstand, der sich über Messwerte des Wandfolgesensors bestimmt; gleichzeitiges Messen eines zweiten Abstandes zur Wand mit dem Abstandssensor; Bestimmen einer Differenz der Abstandswerte des Wandfolgesensors, also des ersten Abstands, und des Abstandssensors, also des zweiten Abstands, mittels einer Rechnereinrichtung des Geräts; und Ermitteln eines kollisionsfreien Abstandswertes zum Wandabschnitt abhängig von dieser Differenz mittels der Rechnereinrichtung, wobei nachfolgende Reinigungsfahrten abhängig von dem ermittelten kollisionsfreien Abstandswert durch eine Abstandsregelung gesteuert werden.

Vorliegend kann das Gerät also mit nur einem einzigen Wandfolgesensor beidseitig an Kanten und Wänden entlangfahren, ohne eine Kollisionsgefahr zu bewirken bei gleichzeitig effizienter Kantenreinigung, indem eine Abstandsregelung bestimmt wird, die unter anderem auf vergangenen Wandfolgesensor-Messwerten basiert. Neben dem Wandfolgesensor verfügt das Gerät über den Abstandssensor, der in einer horizontalen Ebene knapp über einem Gerätegehäuse die Umgebung mit einem 360°-Sichtfeld vermessen kann. Der Abstandssensor, vorzugsweise ein LIDAR-Sensor, ist dafür vorgesehen, Wände, Gegenstände und andere Hindernisse etwa auf einer Bauhöhe des Geräts zu erfassen.

Der Wandfolgesensor ist in Hauptfahrtrichtung des Geräts insbesondere an einer Seitenbürsten-Seite des Geräts direkt vor Fahrantrieben des Geräts positioniert. Damit ist der Wandfolgesensor deutlich niedriger platziert als der Abstandssensor und kann zusätzlich nach unten geneigt sein. Auf diese Weise kann der Wandfolgesensor Gegenstände und Objekte erfassen, die sich kurz über dem Boden befinden. Der Wandfolgesensor hat eine geringe Maximalmessentfernung, sodass sein Einsatz bevorzugt in unmittelbarer Nähe zu Wänden oder Gegenständen erfolgt.

Befährt das Gerät den Wandabschnitt das erste Mal mit der Seitenbürsten-Seite, auf der sich auch der Wandfolgesensor befindet, so hält das Gerät den ersten Abstand von der Wand oder von Gegenständen oder der Sockelleiste gemäß den Messwerten des Wandfolgesensors ein. Gleichzeitig misst der Abstandssensor den zweiten Abstand zur Wand, sodass für jeden Bereich der Wand bestimmt werden kann, welchen Abstand von der Wand das Gerät hat. Unter der Annahme, dass sich die Umstände an der Wand nicht mehr ändern, können die ermittelten Messwerte verwendet werden, um einen geeigneten kollisionsfreien Abstandswert zu bestimmen, auf der nachfolgende Fahrten des Geräts basieren, insbesondere unabhängig von der Fahrtrichtung des Geräts.

Unter einem mobilen, selbstfahrenden Gerät ist insbesondere ein Bodenreinigungsgerät, zu verstehen, welches beispielsweise im Haushaltsbereich Bodenflächen autonom bearbeiten kann. Hierunter zählen unter anderem Saug- und/oder Kehr- und/oder Wischroboter. Diese Geräte arbeiten im Betrieb (Reinigungsbetrieb) bevorzugt ohne oder mit möglichst wenig Nutzereingriff. Beispielsweise fährt das Gerät selbsttätig in einen vorgegebenen Raum, um entsprechend einer vorgegebenen und einprogrammierten Verfahrensstrategie den Boden zu reinigen.

Um hierbei jegliche individuellen Umgebungsbesonderheiten zu beachten, findet bevorzugt eine Explorationsfahrt mit dem mobilen, selbstfahrenden Gerät statt. Unter einer Explorationsfahrt ist insbesondere eine Erkundungsfahrt zu verstehen, die dazu geeignet ist, eine zu bearbeitende Bodenfläche nach Hindernissen, Raumaufteilung und ähnlichem zu erkunden. Ziel einer Explorationsfahrt ist es insbesondere, Gegebenheiten des zu bearbeitenden Bodenbearbeitungsbereich einschätzen und/oder darstellen zu können.

Nach der Explorationsfahrt kennt das mobile, selbstfahrende Gerät seine Umgebung und kann diese in Form einer Umgebungskarte an den Nutzer weitergeben, zum Beispiel in einer App (Reinigungs-App) an einem Mobilgerät. In der Umgebungskarte kann dem Nutzer die Möglichkeit gegeben werden, mit dem mobilen, selbstfahrenden Gerät zu interagieren. Der Nutzer kann mit Vorteil Informationen in der Umgebungskarte einsehen und bei Bedarf ändern und/oder anpassen.

Unter einer Umgebungskarte ist insbesondere jegliche Karte zu verstehen, die geeignet ist, die Umgebung des Bodenbearbeitungsbereichs mit all seinen Hindernissen und Gegenständen darzustellen. Beispielsweise zeigt die Umgebungskarte den Bodenbearbeitungsbereich mit den darin enthaltenen Möbeln und Wänden skizzenartig an.

Die Umgebungskarte mit den Hindernissen wird vorzugsweise in der App an einem tragbaren Zusatzgerät dargestellt. Dies dient insbesondere der Visualisierung zu einer möglichen Interaktion für den Nutzer. Unter einem Zusatzgerät ist vorliegend insbesondere jegliches Gerät zu verstehen, das für einen Benutzer tragbar ist, das außerhalb des mobilen, selbstfahrenden Geräts angeordnet, insbesondere extern und/oder differenziert vom mobilen, selbstfahrenden Gerät ist, und zu einer Anzeige, Bereitstellung, Übermittlung und/oder Übertragung von Daten geeignet ist, wie beispielsweise ein Handy, ein Smartphone, ein Tablet und/oder ein Computer beziehungsweise Laptop.

Auf dem tragbaren Zusatzgerät ist die App, insbesondere eine Reinigungs-App, installiert, die zur Kommunikation des mobilen, selbstfahrenden Geräts mit dem Zusatzgerät dient und insbesondere eine Visualisierung des Bodenbearbeitungsbereichs, also des zu reinigenden Wohnraums oder der zu reinigenden Wohnung beziehungsweise Wohnbereichs ermöglicht. Die App zeigt dem Nutzer dabei vorzugsweise den zu reinigenden Bereich als Umgebungskarte an.

Unter Hindernissen sind jegliche Objekte und/oder Gegenstände zu verstehen, die in einem Bodenbearbeitungsbereich angeordnet sind, beispielsweise dort liegen oder stehen, und die Bearbeitung durch das mobile, selbstfahrende Gerät beeinflussen, insbesondere behindern und/oder stören, wie beispielsweise Möbel, Wände, Vorhänge, Teppiche und ähnliches.

Eine Sockelleiste ist insbesondere eine am Boden entlang einer Wand geführte Leiste zum Abschluss zwischen Boden und Wand. Die Sockelleiste wird dabei mit dem Wandfolgesensor des Geräts detektiert. Der Wandfolgesensor ist vorzugsweise dazu geeignet, kurz oberhalb des Bodens, bevorzugt auf Bodenhöhe, Hindernisse und insbesondere Sockelleisten zu erkennen.

Vorzugsweise ist der Abstandssensor ein LIDAR-Sensor und/oder ein Laserturm, der seine Umgebung in einer horizontalen Ebene durch eine 360°-Rotation abtastet beziehungsweise abscannt. Insbesondere werden von dem Abstandssensor in gleichmäßigen Intervallen Messstrahlen, insbesondere Laserstrahlen, ausgesendet, die für eine Entfernungsmessung Verwendung finden. Die Rotation des Abstandssensors erfolgt um eine Drehachse, insbesondere um eine z-Achse, relativ zum Gerätegehäuse und wird durch einen Motor ausgeführt.

Unter einem Wandfolgesensor ist insbesondere ein Abstandssensor zu verstehen, der dazu geeignet ist, sensornahe und bodennahe Gegenstände, Hindernisse, Objekte und/oder Wände zu detektieren, die sich insbesondere nahe über dem Boden befinden. Hierbei hat der Wandfolgesensor eine geringe Maximalmessentfernung. Vorzugsweise ist der Wandfolgesensor an der Seitenbürsten-Seite des Geräts angebracht.

Unter einem Wandabschnitt ist insbesondere ein Abschnitt einer detektierten Wand zu verstehen, der beispielsweise eine gerade Ausführung der Wand umfasst. Vorzugsweise bilden unterschiedliche, nebeneinander angeordnete Wandabschnitte eine komplette Wand beziehungsweise eine den Raum eingrenzende, umlaufende Wand. An den unterschiedlichen Wandabschnitten kann jeweils das erfindungsgemäße Verfahren durchgeführt werden, sodass jedem Wandabschnitt ein eigener kollisionsfreier Abstandswert und insbesondere eine eigene Abstandsregelung zugeordnet werden. Alternativ ist auch nur ein gezieltes Durchführen des Verfahrens an vorbestimmten oder ausgewählten Wandabschnitten möglich, sodass den übrigen Wandabschnitten kein kollisionsfreier Abstandswert und insbesondere keine Abstandsregelung zugeordnet werden.

Der erste Abstand zur Wand ist insbesondere der Abstand zwischen Gerät und Wandabschnitt beziehungsweise Sockelleiste oder Hindernis, der sich über Messwerte des Wandfolgesensors bestimmt, sodass das Gerät nicht mit der Wand, der Sockelleiste oder Hindernissen kollidiert, aber dennoch möglichst nah eine Wand- beziehungsweise Kantenreinigung zulässt. Dadurch kann eine wandnahe, kollisionsfreie Reinigung gewährleistet werden.

Der zweite Abstand zur Wand ist insbesondere der Abstand zwischen Gerät und Wandabschnitt, der sich über Messwerte des Abstandssensors bestimmt, und insbesondere die Wand beziehungsweise den Wandabschnitt detektiert. Der zweite Abstand ist bei einer Fahrt entlang einer Wand mit Sockelleiste größer als der erste Abstand.

Unter einer Abstandsregelung ist insbesondere eine Regelung bezüglich eines Mindestabstands zu einer Wand oder Gegenständen zu verstehen, der einzuhalten ist, um Kollisionen mit dem Gerät zu vermeiden, aber gleichzeitig so nah an der Wand wie möglich erfolgt, um eine möglichst gesamtflächige und wand- beziehungsweise hindernisnahe Reinigung zu ermöglichen.

Bei einer vorteilhaften Ausführungsform umfasst das Gerät lediglich an einer Seite den Wandfolgesensor. Insbesondere an der gegenüberliegenden anderen Seite weist das Gerät keinen Wandfolgesensor auf. Basierend auf dem ermittelten kollisionsfreien Abstandswert ist ein einziger Wandfolgesensor ausreichend, um eine kollisionsfreie Wand- und Kantenreinigung zu gewährleisten. Ein zweiter Wandfolgesensor ist vorteilhafterweise überflüssig, wodurch sich mit Vorteil Kosteneinsparungen ergeben.

Bei einer weiteren vorteilhaften Ausführungsform ergibt sich der kollisionsfreie Abstandswert beziehungsweise die Abstandsregelung aus ermittelten Mindestabständen der Messungen des Wandfolgesensors und des Abstandssensors. Beim Fahren entlang einer Wand misst der Wandfolgesensor den ersten Abstand zu bodennahen Objekten, wie beispielsweise Sockelleisten. Der Abstandssensor misst den zweiten Abstand zur Wand. Aus der Differenz der Abstandswerte kann bestimmt werden, welchen Abstand das Gerät von der Wand mindestens haben muss, um nicht mit den bodennahen Objekten zu kollidieren, auch wenn kein Wandfolgesensor zum Einsatz kommt.

Bei einer weiteren vorteilhaften Ausführungsform wird der kollisionsfreie Abstandswert in einer Umgebungskarte oder Rasterkarte eingetragen. Insbesondere unter der Annahme, dass sich die Umstände an der Wand, wie vorhandene Sockelleiste, dort platzierte Objekte oder die Wand an sich, nicht mehr ändern, können die ermittelten Mindestabstände, also der kollisionsfreie Abstandswert, in die vorhandene Umgebungsbeziehungsweise Hinderniskarte eingetragen werden.

Bei einer weiteren vorteilhaften Ausführungsform werden in der Umgebungskarte überarbeitete Grenzlinien oder abgrenzende Rasterzellen eingetragen, die vom Gerät nicht überfahren werden sollen. In der Umgebungskarte werden also neue Kanten beziehungsweise Linien basierend auf dem kollisionsfreien Abstandswert eingezogen, die vom Gerät nicht überquert werden dürfen. Dies entspricht im Wesentlichen dem Prinzip von sogenannten No-Go-Lines beziehungsweise No-Go-Areas. Bereiche, in denen der Wandfolgesensor keine bodennahen Objekte erfasst hat, bleiben in der Umgebungskarte unverändert. Entsprechend können in der Rasterkarte (Occupancy Grid Map), die wie eine Umgebungskarte nach der Explorationsfahrt dem Gerät zur Verfügung steht, entsprechende Rasterzellen, die auf Objekte auf Bodenniveau hindeuten, als unpassierbar gekennzeichnet werden beziehungsweise mit einem Faktor belegt werden, der auf ein Objekt oder einen nicht zu passierenden Bereich hinweist. Auch in diesem Fall befährt das Gerät diese Rasterzellen nicht mehr.

Alternativ kann beim Einsatz der Abstandsregelung für die zuvor mit dem Wandfolgesensor erkundeten Bereiche ein erhöhter Mindestabstand vorgemerkt werden, sodass bei einem Aktivieren eines Reglers an diesen Bereichen ein erhöhter Wert für einen zugrundeliegenden Parameter Verwendung findet.

Bei einer weiteren vorteilhaften Ausführungsform kommt bei den nachfolgenden Reinigungsfahrten für die Abstandsregelung lediglich der Abstandssensor zum Einsatz. Vorzugsweise wird ein Messen durch den Wandfolgesensor bei einer Hinfahrt durchgeführt, und bei einer Rückfahrt basiert die Abstandsregelung auf den Messungen des Abstandssensors.

Ist der ermittelte kollisionsfreie Abstandswert beispielsweise in der Umgebungskarte für das Gerät hinterlegt, so greift das Gerät auf die angepasste beziehungsweise mit der dem kollisionsfreien Abstandswert erweiterten Umgebungskarte beziehungsweise auf die angepassten Mindestabstandswerte zu. Mit dem Abstandssensor wird dabei der Abstand zur Wand oder zu den detektierten Hindernissen so gehalten, dass die zuvor als bodennahe Objekte erkannten Bereiche möglichst objektnah ausgelassen werden, wobei auch ohne Wandfolgesensor keine Kollision erfolgt, während das Gerät dennoch möglichst nah an der Wand oder den Objekten fährt. Insbesondere ermöglicht sich, dass das Gerät auch ohne direkte Nutzung des Wandfolgesensors möglichst nah an der Wand entlangfährt und wandnahe Bereiche möglichst großflächig reinigt, ohne der Gefahr von Kollisionen ausgesetzt zu sein.

Insbesondere misst das Gerät bei einer ersten Fahrt mit dem Wandfolgesensor den ersten Abstand zu bodennahen Objekten und gleichzeitig mit dem Abstandssensor den zweiten Abstand zur Wand. Darauf aufbauend wird beispielsweise die Umgebungskarte des Geräts angepasst, in die nun nicht passierbare Bereiche eingetragen werden. Bei einer zweiten Fahrt entlang derselben Wand in entgegengesetzter Richtung zur ersten Fahrt kann das Gerät allein auf Basis der Messwerte des Abstandssensors zur Wand und basierend auf der angepassten Umgebungskarte die entsprechend notwendigen beziehungsweise bevorzugten Abstände zur Wand einnehmen. Die zweite Fahrt ist dabei vorzugsweise eine spiegelverkehrte Kopie der ersten Fahrt.

Bei einer weiteren vorteilhaften Ausführungsform finden Hin- und Rückfahrt in Bereichen statt, in denen ein Teppichboden an eine Wand angrenzt. Vorzugsweise besitzt das Gerät einen Teppichsensor, mit dem es erkennen kann, wann es sich auf einem Teppich befindet. Markiert das Gerät erkannte Teppichflächen oder durch den Nutzer in der App eingegebene Teppichflächen in seiner Umgebungskarte, so kann es das beidseitige Befahren der Wand auf eben jene Bereiche beschränken.

Bei einer weiteren vorteilhaften Ausführungsform wird das Ermitteln des kollisionsfreien Abstandswerts bei einer Explorationsfahrt des Geräts durchgeführt. Insbesondere wird nicht bei jeder Reinigungsfahrt neu das Auswerten der Messwerte des Wandfolgesensors und das Anpassen der Umgebungskarte durchgeführt. Das Gerät kann zwar weiterhin bei jeder Reinigungsfahrt entlang der Wand die Messwerte des Wandfolgesensors auswerten, jedoch muss nicht zwingend bei gleichen Umgebungsbedingungen die Umgebungskarte jedes Mal neu angepasst werden.

Bei einer weiteren vorteilhaften Ausführungsform wird bei Reinigungsfahrten des Geräts kein Ermitteln des kollisionsfreien Abstandswerts durchgeführt, außer, es wird eine Veränderung gegenüber einer vorhandenen Umgebungskarte festgestellt. Detektiert das Gerät mit einem seiner Sensoren eine Kollision mit einem wandnahen Objekt, und damit eine Veränderung gegenüber der Umgebungskarte, wird das Ermitteln des kollisionsfreien Abstandswerts in diesem Wandabschnitt inklusive Anpassung der Umgebungskarte erneut durchgeführt.

Durch das Ermitteln des kollisionsfreien Abstandswerts können insbesondere bei Geräten mit asymmetrisch positioniertem Saugmund die Seitenbürste und der Saugmund gezielt eingesetzt werden, um insbesondere nicht gereinigte Bereiche an der Wand zu reduzieren. Dadurch können Vorteile verschiedener Reinigungsmethoden, beispielsweise Reinigung mit oder ohne Seitenbrüste, ausgenutzt werden. Eine hohe Qualität der Bodenreinigung mit gleichzeitig geringer Kollisionsgefahr und kosteneffizienter Umsetzung ermöglichen sich so mit Vorteil.

Die Erfindung wird anhand der nachfolgenden, lediglich Beispiele darstellenden Ausführungen der Erfindung näher erläutert. Es zeigen:
- Figuren 1A, 1B:: jeweils schematische Ansichten eines Ausführungsbeispiels eines mobilen, selbstfahrenden Geräts, das zu einem erfindungsgemäßen Verfahren einer kollisionsfreien Wand- und/oder Kantenreinigung geeignet ist,
- Figuren 2A, 2B:: jeweils schematische Ansichten eines Ausführungsbeispiels eines mobilen, selbstfahrenden Geräts, das zu einem erfindungsgemäßen Verfahren einer kollisionsfreien Wand- und/oder Kantenreinigung geeignet ist,
- Figuren 3A, 3B:: jeweils schematische Ansichten eines Ausführungsbeispiels eines mobilen, selbstfahrenden Geräts, das einen ersten Verfahrensschritt des erfindungsgemäßen Verfahrens einer kollisionsfreien Wand- und/oder Kantenreinigung durchführt,
- Figur 4:: schematische Ansichten einer Umgebungskarte beziehungsweise Rasterkarte, die in einem weiteren Verfahrensschritt des erfindungsgemäßen Verfahrens einer kollisionsfreien Wand- und/oder Kantenreinigung basierend auf dem ermittelten kollisionsfreien Abstandswert angepasst wird,
- Figuren 5A, 5B:: jeweils schematische Ansichten eines Ausführungsbeispiels eines mobilen, selbstfahrenden Geräts, das einen weiteren Verfahrensschritt des erfindungsgemäßen Verfahrens einer kollisionsfreien Wand- und/oder Kantenreinigung durchführt, und
- Figur 6:: ein Ablaufdiagramm betreffend ein Ausführungsbeispiel eines erfindungsgemäßen Verfahrens.

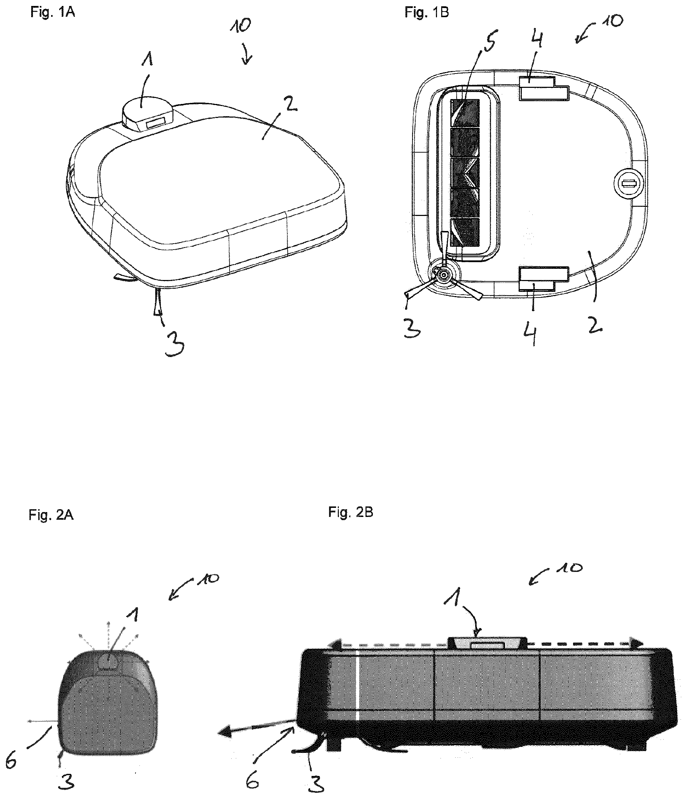

Figur 1A zeigt eine schematische, dreidimensionale Ansicht auf ein mobiles, selbstfahrendes Gerät 10, das insbesondere ein Saugroboter ist. Figur 1B zeigt eine Unteransicht des Geräts 10 der Figur 1A. Der Saugroboter weist an seiner Oberseite in einem hinteren Bereich einen Abstandssensor, insbesondere einen LIDAR-Sensor 1, auf, der auf einem Gerätekörper 2 des Geräts 10 angeordnet ist. Der LIDAR-Sensor 1 erfasst eine horizontale Umgebungsebene über dem Gerät 10 und kann so Abstände zu Wänden oder anderen Objekten messen.

An einem vorderen Eck des Geräts 10 ist eine Seitenbürste 3 angeordnet, die dazu vorgesehen ist, Staub und Schmutz in einen Saugmund 5 zu kehren, in dem eine Bürstenwalze angeordnet ist, und der vor Antriebsrädern 4 des Geräts 10 positioniert ist. Aufgrund der einseitigen Anordnung der Seitenbürste 3 ist der Saugmund 5 dezentral am Gehäusekörper 2 angeordnet. An der Seite des Geräts 10 mit Seitenbürste 3 weist der Saugmund 5 insbesondere einen größeren Abstand zur Gehäusekörpergrenze auf als an der gegenüberliegenden Seite ohne Seitenbürste 3.

Für eine effektive Wand- und Kantenreinigung kehrt die Seitenbürste 3 auf Hartböden den Staub und Schmutz zur Gerätemitte, wo dieser in den Saugmund 5 gesaugt wird. Auf Teppichböden allerdings zeigt die Seitenbürste 3 wenig Wirkung, da sich Schmutzpartikel in den Teppichfasern verhängen können und aufgrund der unebenen Teppichoberfläche keine Kehrwirkung erzielt wird. Um Staub aus dem Teppich zu entfernen, ist es effektiv, den Teppich mit dem Saugmund 5 und der Bürstenwalze zu überstreichen, wodurch die Saugwirkung optimal genutzt werden kann. Wegen der Seitenbürste 3 ist der Saugmund 5 asymmetrisch angeordnet, womit bei einer Wandfahrt mit der rechten Seite entlang der Wand bei einer Teppichreinigung keine optimale Staub- und Schmutzentfernung gewährleistet werden kann. Auf Teppich ist es daher sinnvoll, das Gerät 10 mit seiner nicht-Seitenbürste-Seite an der Wand entlangfahren zu lassen, da so der Saugmund 5 wandnäher an der Wand entlanggeführt wird.

Um bei der Fahrt entlang von Wänden auch bodennahe Objekte wie beispielsweise Sockelleisten berücksichtigen zu können, ist an der in Fahrtrichtung rechtsliegenden Seite ein Wandfolgesensor 6 eingebaut, wie es in den Figuren 2A, 2B dargestellt ist. Dieser misst die seitliche Distanz zu einer Wand beziehungsweise zu den bodennahen Objekten. Zum Beispiel kann so eine Sockelleiste an einer Wand, zu der das Gerät 10 einen geringeren Abstand aufweist als zur Wand selbst, mit dem Wandfolgesensor detektiert werden, womit eine optimale Distanz zwischen Gerät 10 und Wand geregelt werden kann. Um mit der Seitenbürstenfreien-Seite des Geräts, die keinen Wandfolgesensor umfasst, ebenfalls kollisionsfrei an Wänden und bodennahen Objekten entlang fahren zu können, wird bei einem ersten Entlangfahren an der Wand ein optimaler Abstand zur Wand mittels des Wandfolgesensors ermittelt, eine Abstandsregelung erstellt, und bei einer zweiten Fahrt in entgegengesetzter Richtung die Abstandsregelung unter Nutzung des LIDAR-Sensors 1 eingehalten.

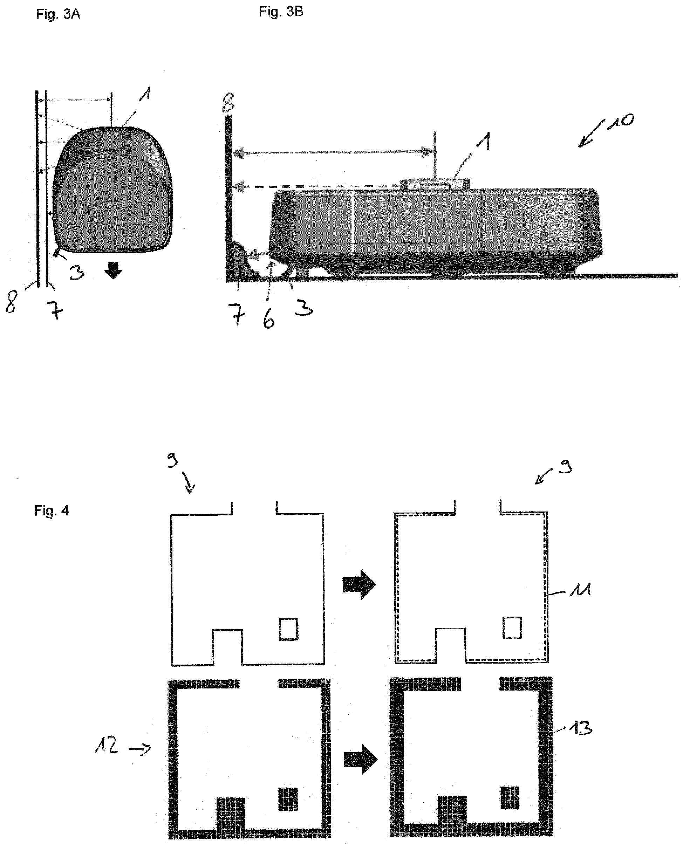

Ein erster Verfahrensschritt, um mit nur einem einzigen Wandfolgesensor 6 ein beidseitiges kollisionsfreies Fahren entlang an Wänden zu ermöglichen, um insbesondere eine effektive Teppichreinigung zu gewährleisten, ist in den Figuren 3A, 3B dargestellt. Das Gerät 10 befährt einen Wandabschnitt 8 das erste Mal mit der Seitenbürsten-Seite, also insbesondere mit der in Fahrtrichtung rechten Seite, an der auch der Wandfolgesensor 6 angeordnet ist, der vorzugsweise bodennah und nach unten geneigt am Gerät 10 positioniert ist. Dabei hält das Gerät 10 einen ersten Abstand von der Wand 8 beziehungsweise einer vorhandenen Sockelleiste 7 gemäß den Messwerten des Wandfolgesensors ein. Gleichzeitig misst auch der LIDAR-Sensor 1 einen zweiten Abstand zur Wand, sodass für jede Stelle des Wandabschnitts 8 bestimmt werden kann, welchen Abstand von der eigentlichen Wand das Gerät 10 einzuhalten hat. Mittels einer Rechnereinrichtung des Geräts 10 wird eine Differenz der gleichzeitigen Abstandswerte des Wandfolgesensors 6 und des LIDAR-Sensors 1 bestimmt, von der abhängig ein kollisionsfreier Abstandswert für eine Abstandsregelung zum Wandabschnitt ermittelt wird.

Der ermittelte kollisionsfreie Abstandswert wird in eine bereits vorhandene Umgebungskarte 9 des Geräts 10 eingetragen, wie es in Figur 4 dargestellt ist. Insbesondere werden in die Umgebungskarte neue Linien 11 eingezogen, die dem ermittelten kollisionsfreien Abstandswert entsprechen, und die vom Gerät 10 bei Reinigungsfahrten nicht überquert werden dürfen. Wandabschnitte, in denen das Gerät keine bodennahen Objekte detektiert hat, bleiben unverändert.

In Figur 4 ist neben der Umgebungskarte 9 eine alternative Rasterkarte 12 gezeigt, in der entsprechend basierend auf dem ermittelten kollisionsfreien Abstandswert Rasterzellen 13 eingetragen werden, die auf Objekte auf Bodenniveau hindeuten, und entsprechend als unpassierbar gekennzeichnet werden. Das Gerät 10 befährt diese Rasterzellen nicht mehr.

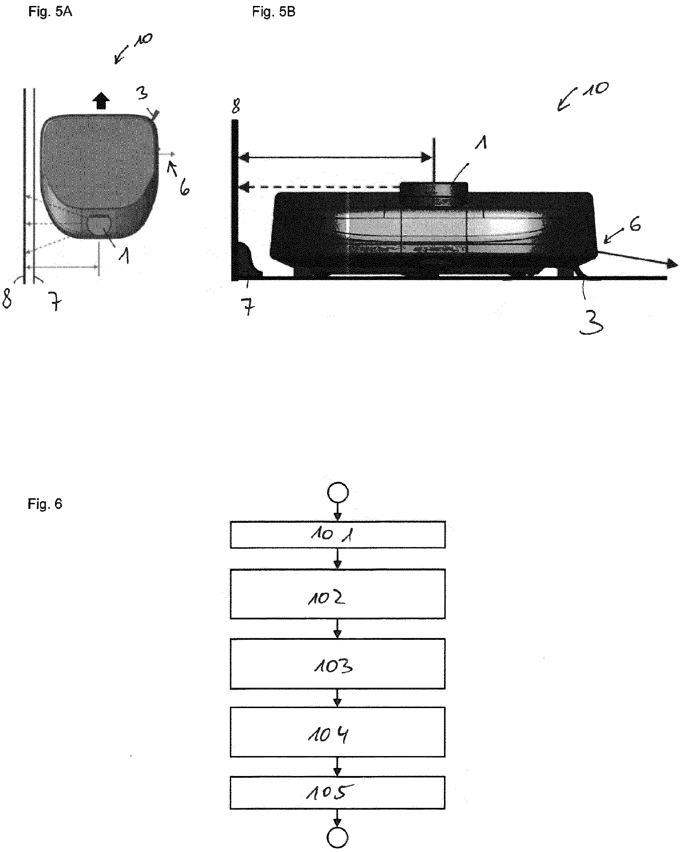

Soll das Gerät 10 den Wandabschnitt ein weiteres Mal und in entgegengesetzter Richtung, also spiegelverkehrt, befahren, weil beispielsweise dort ein Teppich angeordnet ist, so greift das Gerät 10 auf die angepasste und erweitere Umgebungskarte zu, in der der ermittelte kollisionsfreie Abstandswert eingetragen ist. Mittels LIDAR-Sensor 1 wird dabei der Abstand zur Wand 8 so gehalten, dass die zuvor als nicht-passierbar eingestuften Bereiche ausgelassen werden, und auch ohne Wandfolgesensor 6 keine Kollision erfolgt, während das Gerät 10 dennoch möglichst wandnah fährt, wie es in den Figuren 5A, 5B dargestellt ist. Das Gerät fährt bei der Rückfahrt also beispielsweise im zweiten Abstand an der Wand entlang.

Vorzugsweise markiert das Gerät 10 in der Umgebungskarte Wandabschnitte, in denen Teppichflächen bis an die Wand heranreichen. Ein beidseitiges Befahren von Wandabschnitten kann dann auf diese Bereiche beschränkt werden.

In Figur 6 ist ein Prinzipablauf des Ermittlungsverfahrens für den kollisionsfreien Abstandswert dargestellt. In Schritt 101 beginnt das Gerät 10 seine Reinigungsfahrt. Bei einer ersten Fahrt entlang eines Wandabschnitts 8 erfolgt die Abstandsregelung mittels des Wandfolgesensors bei gleichzeitiger Abstandsmessung mittels des LIDAR-Sensors 1 (Schritt 102). Nach Ermitteln des für eine kollisionsfreie Fahrt notwendigen kollisionsfreien Abstandswerts wird die Umgebungskarte mit neuen Linien beziehungsweise Kanten gemäß der Differenz der Abstandswerte von Wandfolgesensor 6 und LIDAR-Sensor 1 angepasst (Schritt 103). Bei einer zweiten Fahrt entlang desselben Wandabschnitts erfolgt die Abstandsregelung lediglich mittels des LIDAR-Sensors 1 basierend auf der angepassten Umgebungskarte, die auf dem ermittelten kollisionsfreien Abstandswert basiert (Schritt 104). Im Schritt 105 setzt das Gerät nach der Wandabschnittsreinigung seine Reinigungsfahrt fort oder beendet diese.

Das Ermittlungsverfahren für den kollisionsfreien Abstandswert kann bei jeder ersten Fahrt entlang von Wandabschnitten neu ausgeführt werden. Alternativ kann ein derartiges Verfahren lediglich bei einer initialen Exploration des Geräts stattfinden. Wird allerdings eine neue Kollision erkannt, und damit eine Veränderung gegenüber der vorhandenen Umgebungskarte festgestellt, wird die erste Fahrt entlang des Wandabschnitts inklusive der Anpassung der Umgebungskarte erneut durchgeführt.

## Patentansprüche

1. Verfahren zu einer kollisionsfreien Wand- und/oder Kantenreinigung mittels eines mobilen, selbstfahrenden Geräts (10), insbesondere eines Bodenreinigungsgeräts zur autonomen Bearbeitung von Bodenflächen, wie ein Saug- und/oder Kehr- und/oder Wischroboter, das einen seitlich angeordneten Wandfolgesensor (6) und einen Abstandssensor (1) umfasst, mit folgenden Verfahrensschritten:
- Befahren eines Wandabschnitts (8) in einem ersten Abstand, der sich über Messwerte des Wandfolgesensors (6) bestimmt,
- gleichzeitiges Messen eines zweiten Abstandes zur Wand mit dem Abstandssensor (1), **dadurch gekennzeichnet, dass**
- eine Differenz der Abstandswerte des Wandfolgesensors (6) und des Abstandssensors (1) mittels einer Rechnereinrichtung des Geräts (10) bestimmt wird, und
- ein kollisionsfreier Abstandswert zum Wandabschnitt (8) abhängig von der Differenz mittels der Rechnereinrichtung ermittelt wird, wobei nachfolgende Reinigungsfahrten abhängig von dem ermittelten kollisionsfreien Abstandswert durch eine Abstandsregelung gesteuert werden.

2. Verfahren nach Anspruch 1, wobei das Gerät (10) lediglich an einer Seite den Wandfolgesensor (6) umfasst, und insbesondere an der gegenüberliegenden anderen Seite keinen Wandfolgesensor aufweist.

3. Verfahren einem der vorhergehenden Ansprüche, wobei sich der kollisionsfreie Abstandswert ergibt aus ermittelten Mindestabständen der Messungen des Wandfolgesensors (6) und des Abstandssensors (1).

4. Verfahren nach einem der vorhergehenden Ansprüche, wobei der kollisionsfreie Abstandswert in einer Umgebungskarte (9) oder Rasterkarte (12) eingetragen wird.

5. Verfahren nach Anspruch 4, wobei in der Umgebungskarte (9) oder Rasterkarte (12) überarbeitete Grenzlinien (11) oder abgrenzende Rasterzellen (13) eingetragen werden, die vom Gerät (10) nicht überfahren werden sollen.

6. Verfahren nach einem der vorhergehenden Ansprüche, wobei bei nachfolgenden Reinigungsfahrten bei der Abstandsregelung lediglich der Abstandssensor (1) zum Einsatz kommt.

7. Verfahren nach einem der vorhergehenden Ansprüche, wobei ein Messen mit dem Wandfolgesensor (6) lediglich bei einer Hinfahrt durchgeführt wird, und bei einer Rückfahrt lediglich Messungen mit dem Abstandssensor (1) durchgeführt werden.

8. Verfahren nach Anspruch 7, wobei Hin- und Rückfahrt in Bereichen stattfinden, in denen ein Teppichboden an eine Wand (8) angrenzt.

9. Verfahren nach einem der vorhergehenden Ansprüche, wobei das Ermitteln des kollisionsfreien Abstandswerts bei einer Explorationsfahrt des Geräts (10) durchgeführt wird.

10. Verfahren nach Anspruch 9, wobei bei Reinigungsfahrten des Geräts (10) kein Ermitteln des kollisionsfreien Abstandswerts durchgeführt wird, außer, es wird eine Veränderung gegenüber einer vorhandenen Umgebungskarte (9) oder Rasterkarte (12) festgestellt.

## Claims

1. Method for collision-free wall and/or edge cleaning by means of a mobile, self-driving appliance (10), in particular a floor cleaning appliance for autonomous processing of floor areas, such as a vacuum cleaning and/or sweeping and/or mopping robot, which comprises a wall tracking sensor (6) arranged on the side and a distance sensor (1), with the following method steps:
- travelling along a wall section (8) at a first distance, which is determined via measurement values of the wall tracking sensor (6),
- simultaneously measuring a second distance from the wall with the distance sensor (1), **characterised in that**
- a difference between the distance values of the wall tracking sensor (6) and the distance sensor (1) is determined by means of a computer facility of the appliance (10), and
- a collision-free distance value is ascertained in relation to the wall section (8) as a function of the difference by means of the computer facility, wherein subsequent cleaning journeys are controlled as a function of the ascertained collision-free distance value by a distance controller.

2. Method according to claim 1, wherein the appliance (10) only comprises the wall tracking sensor (6) on one side, and in particular does not have a wall tracking sensor on the opposite other side.

3. Method according to one of the preceding claims, wherein the collision-free distance value is produced from ascertained minimum distances of the measurements of the wall tracking sensor (6) and the distance sensor (1).

4. Method according to one of the preceding claims, wherein the collision-free distance value is entered in an environment map (9) or grid map (12).

5. Method according to claim 4, wherein revised border lines (11) or delimiting grid cells (13), which are not to be crossed by the appliance (10), are entered in the environment map (9) or grid map (12).

6. Method according to one of the preceding claims, wherein only the distance sensor (1) is used for distance control for subsequent cleaning journeys.

7. Method according to one of the preceding claims, wherein a measurement with the wall tracking sensor (6) is only performed on an outward journey, and only measurements with the distance sensor (1) are performed on a return journey.

8. Method according to claim 7, wherein outward and return journey take place in regions in which a carpet floor is adjacent to a wall (8).

9. Method according to one of the preceding claims, wherein the ascertaining of the collision-free distance value is performed during an exploration journey of the appliance (10).

10. Method according to claim 9, wherein, during cleaning journeys of the appliance (10), ascertaining of the collision-free distance value is not performed, unless a change is established compared to an available environment map (9) or grid map (12).

## Revendications

1. Procédé (200) de nettoyage de paroi et/ou des bords sans collision à l'aide d'un appareil mobile automoteur (10), en particulier un appareil de nettoyage du sol pour un traitement autonome des surfaces de sol, tel qu'un robot aspirateur, un robot de balayage et/ou un robot laveur de sol, qui comprend un capteur de poursuite de paroi (6) disposé latéralement et un capteur de distance (1), le procédé comprenant les étapes suivantes :
- déplacement le long d'une section de mur (8) à une première distance, qui est déterminée par l'intermédiaire de valeurs de mesure du capteur de poursuite de paroi (6),
- mesure simultanée d'une deuxième distance par rapport à la paroi au moyen du capteur de distance (1), **caractérisé en ce**
- **qu'**une différence des valeurs de distance du capteur de poursuite de paroi (6) et du capteur de distance (1) est déterminée au moyen d'un dispositif de calcul de l'appareil (10), et
- **qu'**une valeur de distance sans collision par rapport à la section de paroi (8) est déterminée au moyen du dispositif de calcul en fonction de la différence, dans lequel des trajets de nettoyage consécutifs sont commandés par une régulation de distance en fonction de la valeur de distance sans collision déterminée.

2. Procédé selon la revendication 1, dans lequel l'appareil (10) comprend le capteur de poursuite de paroi (6) uniquement sur un côté, et en particulier ne comprend aucun capteur de poursuite de paroi sur l'autre côté opposé.

3. Procédé selon l'une des revendications précédentes, dans lequel la valeur de distance sans collision est obtenue à partir de distances minimales déterminées des mesures du capteur de poursuite de paroi (6) et du capteur de distance (1).

4. Procédé selon l'une des revendications précédentes, dans lequel la valeur de distance sans collision est ajoutée dans une carte d'environnement (9) ou une carte matricielle (12).

5. Procédé selon la revendication 4, dans lequel des lignes de limite actualisées (11) ou des cellules de grille de délimitation (13) qui ne doivent pas être franchies par l'appareil (10) sont ajoutées dans la carte d'environnement (9) ou la carte matricielle (12).

6. Procédé selon l'une des revendications précédentes, dans lequel, lors des trajets de nettoyage consécutifs, seul le capteur de distance (1) est utilisé pour la régulation de distance.

7. Procédé selon l'une des revendications précédentes, dans lequel une mesure avec le capteur de poursuite de paroi (6) est effectuée uniquement lors d'un trajet aller, et lors d'un trajet de retour les mesures sont réalisées seulement avec le capteur de distance (1).

8. Procédé selon la revendication 7, dans lequel un trajet aller et un trajet de retour sont effectués dans des zones dans lesquelles un revêtement de sol textile est adjacent à une paroi (8).

9. Procédé selon l'une des revendications précédentes, dans lequel la détermination de la valeur de distance sans collision est effectuée lors d'un parcours d'exploration de l'appareil (10).

10. Procédé selon la revendication 9, dans lequel, lors des trajets de nettoyage de l'appareil (10), aucune détermination de la valeur de distance sans collision n'est effectuée, excepté s'il est constaté un changement par rapport à une carte d'environnement (9) ou une carte matricielle (12) existante.
